Europäisches Patentamt

European Patent Office

Office européen des brevets

(19)

(11) Veröffentlichungsnummer: **0 303 831**
**A2**

(12) **EUROPÄISCHE PATENTANMELDUNG**

(21) Anmeldenummer: **88111528.1**

(22) Anmeldetag: **18.07.88**

(51) Int. Cl.⁴: **G01B 21/04**

(30) Priorität: **21.08.87 DE 3727923**
**02.04.88 DE 3811235**

(43) Veröffentlichungstag der Anmeldung:
**22.02.89 Patentblatt 89/08**

(84) Benannte Vertragsstaaten:
**CH DE FR GB IT LI**

(71) Anmelder: **WEGU-MESSTECHNIK GMBH**
**Wendelstrasse**
**D-6633 Wadgassen(DE)**

(72) Erfinder: **Linder, Kurt**
**Karlsruher Strasse 39**
**D-7500 Karlsruhe(DE)**
Erfinder: **Gurny, Werner**
**Wendelstrasse 90**
**DE-6633 Wadgassen(DE)**

(54) **Dynamischer Tastkopf.**

(57) Mit der Erfindung wird ein dynamischer Tastkopf (1) vorgeschlagen, der einen zentral eingesetzten Taster (2) besitzt und sich durch eine definierte Kippachse in den Koordinatenrichtungen X und Y auszeichnet. Die Kippachsen werden durch fünf übereinander liegende Scheiben (3′, 4′, 5′, 6′, 7′) gebildet, die durch vorzugsweise einstückig gebildete Gelenke (8′, 9′, 10′, 11′) an den Seitenkanten der Scheiben geformt sind. Die einstückige Herstellung des so gebildeten Federpaketes erfolgt in bevorzugter Weise durch ein Funkenerosion-Bearbeitungsverfahren.

FIG. 5

EP 0 303 831 A2

## Dynamischer Tastkopf

Die Erfindung betrifft einen dynamischen Tastkopf für Meßmaschinen und für den Einsatz in Bearbeitungsmaschinen zur Lösung von Meßaufgaben nach dem Oberbegriff des Patentanspruches 1.

Aus der DE-PS 32 34 851 ist ein solcher dynamischer Tastkopf für Meßmaschinen bekannt, bei dem ein Paket von fünf übereinander liegenden und mit gleichlangen Hebelarmen ausgestatteten Platten vorgesehen ist, die an ihren Seitenkanten gelenkig untereinander verbunden sind, so daß ein Kraftfluß in bestimmter Weise eingehalten wird. Die übereinander liegenden Platten des bekannten Tastkopfes sind starre Metallscheiben. Die Gelenke an den Seitenkanten werden durch rechtwinklig zu den Platten angeordnete Blattfedern gebildet. Bei diesem bekannten Tastkopf hat sich herausgestellt, daß der Bauteileaufwand relativ hoch ist und die Einzelteile nach relativ aufwendiger und präziser Einzelherstellung sehr sorgfältig montiert werden müssen, damit die gewünschte Meßgenauigkeit des Tastkopfes gewährleistet ist. Hinzu kommt, daß die jeweils über zwei Platten an den Blattfedergelenken mögliche Auslenkung des Taststiftes nur unter einem relativ hohen Kraftaufwand erfolgen kann.

Aus der DE-PS 26 20 099 ist ein Meßkopf bekannt, welcher mit in den drei Koordinatenrichtungen bewegbaren Meßtastern ausgerüstet ist und bei dem Blattfedergelenke mit hintereinander geschalteten Blattfedern vorgesehen sind.

Aus der US-PS 4,553,332 ist eine Tasteinrichtung zum Messen linearer Dimensionen bekannt, die mit einem Träger ausgerüstet ist und einen Meßfühler an einem tragenden, beweglichen Arm aufweist. Ein einstückiges Bauteil stellt die Verbindung zwischen dem Träger und dem beweglichen Arm dar. Dieses einstückige Bauteil besitzt einen ersten, einen zweiten und einen Zwischenabschnitt, die durch Einschnitte und Bohrungen voneinander getrennt sind und über relativ schmale Stege miteinander in Verbindung stehen. Dieses einstückige Bauteil als Kern der Tasteinrichtung baut relativ voluminös und ist technisch aufwendig und kompliziert aufgebaut. Die Meßkontaktgaben sind über Kontaktpunkte an beweglichen Abschnitten möglich und bedürfen der ständigen Federunterstützung. Obwohl der genannte Körper groß und voluminös erscheint, ist er dennoch aufgrund der vielen Einschnitte und Bohrungen in unterschiedlichen Ebenen und Richtungen ein labiles Gebilde.

Ausgehend von dem vorgenannten Stand der Technik ist es Aufgabe der Erfindung, einen dynamischen Tastkopf der eingangs genannten Art zu schaffen, der nur aus wenigen Einzelteilen aufgebaut ist und in den Koordinatenrichtungen X und Y sowohl definierte als auch relativ leichte Auslenkkräfte sowie eine gute Reproduzierbarkeit der Bewegungen des gesamten Tasters aufweist, und wobei eine Verschiebung der einzelnen Platten vermieden wird.

Diese Aufgabe wird erfindungsgemäß mit den Merkmalen des Kennzeichenteiles von Patentanspruch 1 gelöst. Erfindungsgemäße Ausgestaltungen finden sich in den Unteransprüchen 2 bis 18.

Der besondere Vorteil dieser Lösung liegt darin, daß die drei zwischen den beiden äußeren Scheiben liegenden Platten als Blattfedern ausgebildet sind, die an ihren Außenkanten miteinander gelenkig verbunden sind. Diese Ausbildung erspart die üblicherweise an den Seitenkanten angebrachten Blattfedergelenke für die Auslenkung des Tasters. Außerdem ist die Bauhöhe der übereinander gelegten Scheiben wegen der eingesetzten Blattfedern außerordentlich gering. Die Blattfederscheiben sind an ihren der Verbindung untereinander dienenden Seitenkanten durch Schweißen, beispielsweise Laserschweißen, fest verbunden, was ihre Verschiebung untereinander verhindert und zur Versteifung in Auslenkrichtung beiträgt. Durch den Einsatz von Stiften, die in Bohrungen der übereinander aufgebauten Blattfedern eintauchen, findet in vorteilhafter Weise eine ständige Zentrierung des Tastkopfes nach einem Antastvorgang statt.

Der besondere Vorteil des einstückig gebildeten Federblocks nach Anspruch 5 und folgenden besteht darin, daß der gesamte Federblock für die Auslenkung des Tasters in den X- und Y-Koordinatenrichtungen aus einem einzigen Stück besteht. Da die parallel in den X- und Y-Ebenen verlaufenden Einschnitte im Funkenerosionsverfahren sehr dünn sind, baut der gesamte Federblock nur wenige Millimeter hoch. Eine Verschiebung der einzelnen Blattfederscheiben untereinander ist grundsätzlich ausgeschlossen. Der einstückige Block ist ein relativ steifes Gebilde, der präzise Auslenkungen des Tasters in den Koordinatenrichtungen erlaubt und dazu torsionssteif ist.

In Weiterbildung der Erfindung kann das unterste Gelenk als Steg ausgebildet sein, der mit der fünften Scheibe durch Schrauben befestigt ist.

Eine besonders vorteilhafte Weiterbildung erfährt der Tastkopf dadurch, daß auf der den Blattfederscheiben zugewandten Oberfläche der fünften Scheibe vier Hartmetallzapfen unter Zwischenfügung einer Isolierung fest aufgebracht sind, die auf einem gemeinsamen Kreisring und koaxial zu den Hartmetallzapfen in allen übereinander liegenden Scheiben angebrachten Durchgangsbohrungen angeordnet sind und gegen in den Durchgangsbohrungen eingepreßten Hartmetallkugeln in der Ruhelage des Tastkopfes anliegen. Dabei können die Hartmetallzapfen auf der Oberfläche der fünften Scheibe aufgeklebt sein. Die Hartmetallkugeln können ferner eine Schicht aus elektrisch leitendem Material, wie beispielsweise Nickel oder Gold, aufweisen. In den Hartmetallzapfen können außerdem Querbohrungen vorgesehen sein. Bei Auflage der Kugeln auf den Hartmetallzapfen ist ein elektrischer Kontakt geschlossen, welcher in der Auswerteinheit vermerkt ist. Sobald der Taststift an ein Werkstück antastet und dabei über die Blattfederscheiben eine Auslenkung erfährt, wird der Kontakt zwischen einer Kugel und einem Aufnahmezapfen unterbrochen, was zu einem Signal in der Auswerteinheit führt. In den Querbohrungen der Hartmetallzapfen können beispielsweise Kabelschuhe eingesteckt sein, wodurch zwischen den Hartmetallzapfen und der Auswerteinheit eine elektrische Verbindung möglich ist.

Schließlich kann die erste Scheibe mit einem Aufnahmekörper für den Taststift verbunden sein, dessen zylindrischer Körper durch zentral in den Scheiben angeordnete Öffnungen ragt, während die Kopfscheibe unter der Wirkung einer sich am Gehäuse des Tastkopfes abstützenden Feder steht.

In der Zeichnung sind Beispiele der Erfindung dargestellt. Es zeigen:

Fig. 1 eine vereinfachte Darstellung eines Tastkopfes mit gelenkig miteinander verbundenen Blattfederscheiben;

Fig. 2 den Tastkopf nach Fig. 1 in vergrößerter Seitenansicht;

Fig. 3 den Tastkopf in der um 90° gedrehten Seitenansicht gemäß der Pfeilrichtung III in Fig. 2;

Fig. 4 eine Draufsicht auf den Tastkopf entsprechend dem Pfeil IV in Fig. 3;

Fig. 5 eine vereinfachte Darstellung eines Tastkopfes mit einstückig angelenkten Blattfederscheiben in der Seitenansicht;

Fig. 6 eine Seitenansicht des Tastkopfes nach der Pfeilrichtung VI in Fig. 5;

Fig. 7 ein Detail des Tastkopfes nach Fig. 5, teilweise im Schnitt;

Fig. 8 eine Draufsicht auf die untere Scheibe des Tastkopfes gemäß der Linie VIII-VIII in Fig. 7.

Der Tastkopf 1 ist in einem Gehäuse 15 eingebaut und besitzt einen zentral angeordneten Taster 2. Der gesamte Tastkopf 1 besteht aus einem Paket von fünf übereinander liegenden Platten 3, 4, 5, 6, 7 bzw. 3', 4', 5', 6', 7', die über Gelenke 8, 9, 10, 11 bzw. 8', 9', 10', 11' an ihren Seitenkanten untereinander verbunden sind. Dies bedeutet, daß bei Auslenkung des Tasters 2 in eine der Koordinatenrichtungen X, Y das Plattenpaket des Tastkopfes 1 um eine an den Seitenkanten der Platten verlaufende Kippachse kippt.

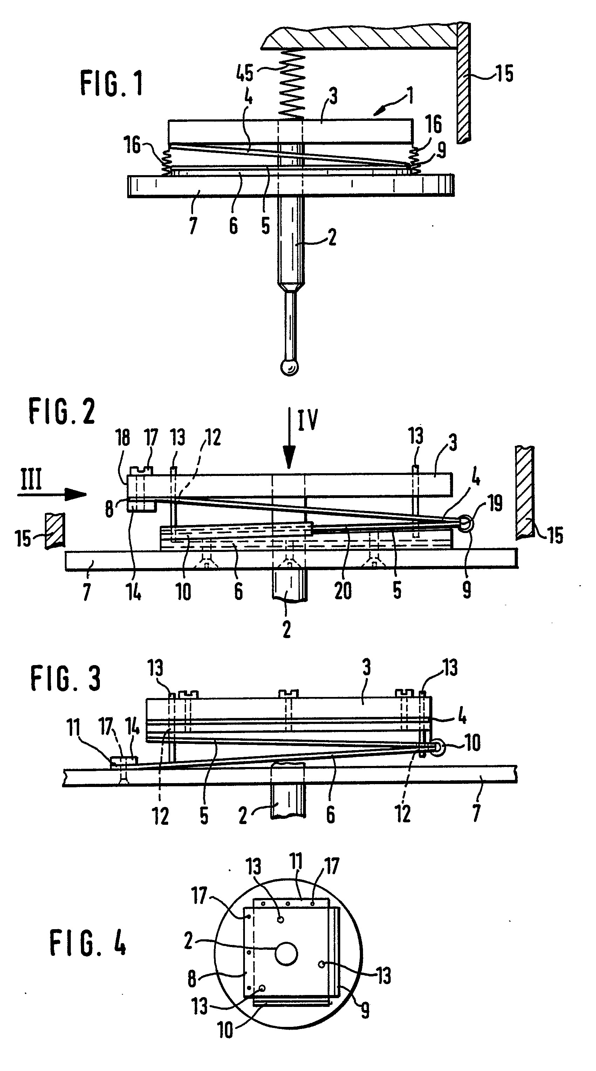

Im einzelnen ist der Aufbau des Tastkopfes 1 nach den Figuren 1 bis 4 so vorgenommen, daß eine obere feste Scheibe 3 von rechteckigem Querschnitt an einer Seitenkante die zweite Scheibe 4 aufnimmt, die als Blattfeder ausgebildet ist. Diese Blattfederscheibe 4 ist durch einen Steg 14 an die obere Platte 3 durch Schrauben 17 befestigt. Diese Befestigung bildet gleichzeitig das erste Gelenk 8 mit der Kippachse entlang der Seitenkante 18 der Scheibe 3. Gegenüberliegend diesem Gelenk 8 ist ein zweites Gelenk 9, welches als ein Zylinder ausgebildet ist, der sich entlang der Seitenkante 19 der Blattfeder 4 erstreckt. Dieser Zylinder ist parallel zu seiner Längsachse aufgeschlitzt, so daß die Seitenkante 19 der Blattfederscheibe 4 in das Gelenk eingeklemmt werden kann. Die dritte Scheibe 5 ist wiederum als Blattfeder ausgebildet und ebenfalls in den Zylinder des Gelenkes 9 zusätzlich zur Blattfederscheibe 4 eingesetzt und gleichzeitig mit ihrer Seitenkante mit der Seitenkante der Blattfederscheibe 4 verschweißt. Die beiden Blattfederscheiben 4 und 5 sind also in einem einzigen, gemeinsamen, zylindrisch ausgebildeten Gelenk 9 eingeklemmt. Um 90° zum Gelenk 9 versetzt befindet sich an der Seitenkante 20 der Blattfederscheibe 5 wiederum ein Gelenk 10, welches ebenfalls als ein Zylinder ausgebildet ist, der entlang der Seitenkante 20 der Blattfederscheibe 5 aufgeschlitzt ist.

In diesem Schlitz des Zylinders ist die Seitenkante der weiteren Blattfederscheibe 6 eingeklemmt, welche außerdem an dem vom Gelenk 10 gegenüberliegenden Ende durch einen Steg 14 mit Schrauben 17 auf der unteren Platte 7 gelenkig befestigt ist. Die Seitenkanten der Blattfederscheiben 5 und 6 im Gelenk 10 sind ebenfalls miteinander durch Schweißen, beispielsweise Laserschweißen, unverschieblich miteinander verbunden.

Durch diese Anordnung der zwischen den beiden äußeren starren Scheiben 3 und 7 als Paket eingesetzten und miteinander gelenkig verbundenen Blattfederscheiben 4, 5 und 6 ergibt sich folgender Kraftfluß bei Auslenkung des Tasters 2 in den Koordinatenrichtungen X und Y:

Von der oberen starren Scheibe 3 verläuft die Kraft über das Gelenk 8 auf die Blattfederscheibe 4 und von dieser Blattfederscheibe 4 über das dem Gelenk 8 direkt gegenüberliegende Gelenk 9 auf die weitere Blattfederscheibe 5. Von dieser geht der Kraftfluß weiter über das um 90° zum Gelenk 9 versetzt angeordnete Gelenk 10 auf die nächste Blattfederscheibe 6 über. Von dort verläuft der Kraftfluß über das dem Gelenk 10 wieder gegenüberliegende, letzte Gelenk 11 auf die untere starre Scheibe 7.

Aus der beispielhaften Darstellung ist ersichtlich, daß die Hebelarme vom Taster 2 zu allen vier Seiten immer gleichlang sind. Der Taster 2 kippt immer über eine parallel zu den Koordinatenrichtungen X oder Y laufende Seitenkante einer Scheibe bzw. Blattfederscheibe. Dies gewährleistet ein sehr genaues Abkippen in den Koordinatenrichtungen. Durch die zwischen den beiden äußeren Scheiben 3 und 7 angeordneten Blattfederscheiben 4, 5 und 6 ist ein relativ weiches Abkippen des Tasters über die Kippachsen möglich, wobei durch entsprechende Federhärten der Blattfederscheiben 4, 5, 6 das Abkippmoment veränderbar ist.

Zur Erzeugung einer definierten Auslenkkraft in den Koordinatenrichtungen X und Y sind entsprechend dem Beispiel in Fig. 1 die übereinander liegenden Scheiben 3, 4, 5, 6 und 7 durch vier an den Platteneckpunkten angeordnete und auf Zug beanspruchte Federn 16 in der Ruhelage gehalten.

Um nach jedem Antasten des Tasters 2 an einem Werkstück und einem entsprechenden Auslenkvorgang für den Tastkopf immer wieder die gleiche Ausgangsposition der einzelnen Scheiben zu gewährleisten, sind in die äußere Scheibe 3 insgesamt drei zueinander verteilt angeordnete Stifte 13 befestigt, welche nach unten in Richtung auf die äußere Platte 7 hervorragen und in koaxial untereinander angeordnete Bohrungen 12 der Blattfederscheiben 4, 5 und 6 eintauchen. Diese Bohrungen 12 sind gegenüber den Stiften 13 von größerem Durchmesser, um das Abkippen des Tasters 2 über die jeweiligen Gelenke nicht zu beeinträchtigen.

Die Rückführung des Tasters 2 geschieht im wesentlichen durch die Blattfederscheiben 4, 5 und 6 in den Gelenken 8, 9, 10 und 11 und wird durch die an den vier Eckpunkten angebrachten Zugfedern 16 unterstützt.

Die Auslenkung des Tasters 2 in der Koordinatenrichtung Z erfolgt gegen die Kraft einer eingesetzten Feder 45, die sich im Gehäuse 15 des Tastkopfes 1 abstützt. Dazu kann das Auslenken des Tasters 2 in der Z-Richtung nach oben durch einen Anschlag im Gehäuse 15 begrenzt sein.

Die Ausbildung der Scheiben 4, 5, 6 als Blattfedern und ihre besondere Anordnung im Winkel um 90° zueinander bietet die großen Vorteile, daß die Blattfederscheiben selbst relativ lange Feder-Hebelarme bilden und daß ihre Beanspruchung immer in Faserrichtung des Werkstoffes erfolgt. Dies hat zur Folge, daß bei Kollisionen des Tasters 2 mit einem ortsfesten Gegenstand eine federnde Auslenkung geschieht, ohne daß eine bleibende Verformung der Blattfederscheiben 4, 5, 6 oder ihrer Gelenke 8, 9, 10, 11 eintritt.

Dadurch ist die Wirksamkeit und die Funktionsfähigkeit insbesondere gegenüber dem Tastkopf nach der DE-PS 32 34 851 in erfinderischer Weise entscheidend verbessert worden.

An die Stelle der Verschweißung der Blattfederscheiben 4, 5, 6 kann im Sinne der Erfindung auch jede andere feste Verbindung treten, wie beispielsweise Nieten, Schrauben, Kleber oder dergleichen. Das gleiche gilt für die Verbindung der Seitenkanten der Blattfederscheiben 4 und 6 mit den äußeren Scheiben 3 und 7. Hier kann statt der Verschraubung ein Schweißen, Nieten oder Kleben gewählt werden. Entscheidend ist es, daß die Scheiben 3, 4, 5, 6, 7 im Betrieb untereinander unverschieblich sind, so daß immer reproduzierbare Auslenkungen des Tasters 2 möglich sind. die geschlitzten Zylinder haben darüberhinaus die Funktion der Schutzkappe für die Seitenkanten der Blattfederscheiben und eine Versteifung übernommen, so daß die Auslenkung immer exakt in einer Richtung erfolgt und undefinierte Querbewegungen der Blattfedern unterbleiben.

Hinsichtlich der drei Stifte 13 ist noch auszuführen, daß diese nicht nur eine Zentrierung der Blattfederscheiben 4, 5, 6 und deren einwandfreie Lage übereinander nach erfolgter Auslenkung gewährleisten, sondern auch eine Dreipunktauflage der Scheiben 3, 4, 5, 6, 7 bilden.

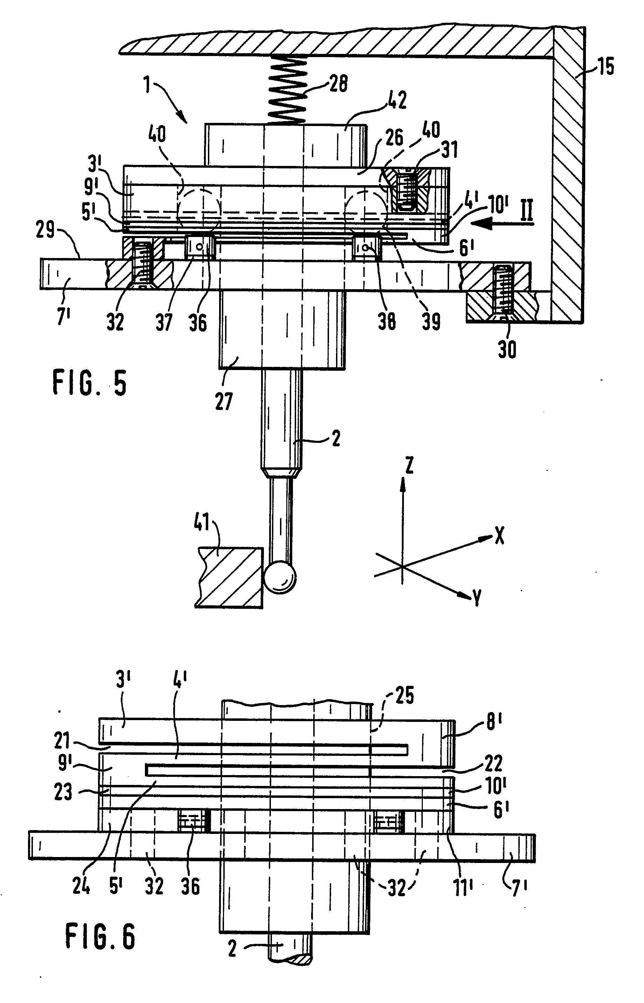

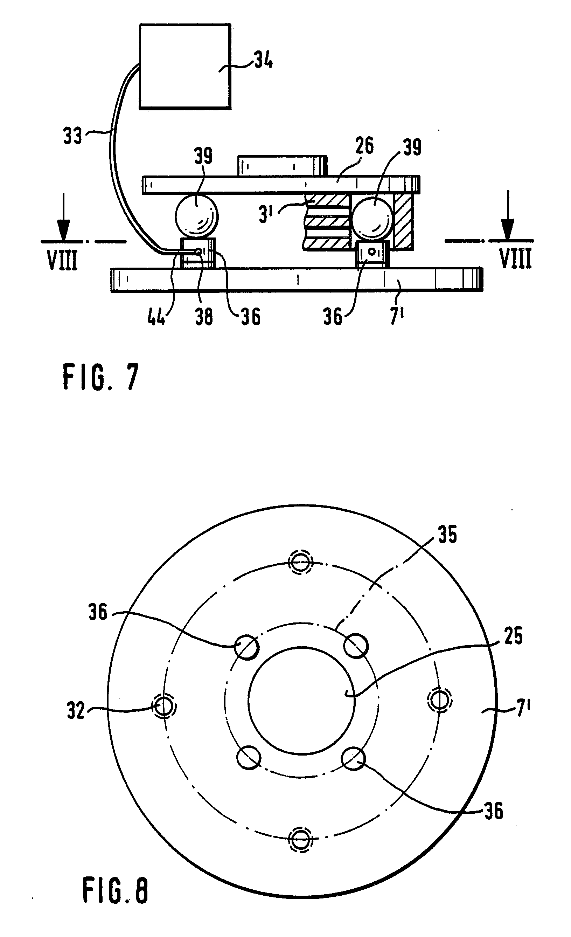

Nach den Figuren 5 bis 8 ist eine vorteilhafte und in der Erprobung bewährte Alternative des Tastkopfes 1 dargestellt.

Bei dieser Alternativlösung ist der Tastkopf 1 in einem Gehäuse 15 eingebaut und mit diesem Gehäuse 15 durch Schrauben 30 verbunden. Der Tastkopf 1 besitzt einen zentral angeordneten Taster 2, welcher in einem Aufnahmekörper 27 eingesetzt ist, der mit seiner Kopfscheibe 42 in Z-Richtung unter der Wirkung einer Feder 28 steht, die sich am Gehäuse 15 abstützt. Der gesamte Tastkopf 1 besteht aus einem Paket von fünf übereinander liegenden Scheiben 3′, 4′, 5′, 6′, 7′, die über Gelenke 8′, 9′, 10′, 11′ an ihren Seitenkanten untereinander einstückig miteinander verbunden sind. Dies bedeutet, daß bei der Auslenkung des Tasters 2 in eine der Koordinatenrichtungen X, Y das Plattenpaket des Tastkopfes 1 im eine an den Seitenkanten der Scheiben verlaufende Kippachse kippt.

Im einzelnen ist der Aufbau dieses Tastkopfes 1 nach den Figuren 5 bis 8 so vorgenommen, daß eine obere feste Scheibe 3′ von rechteckigem Querschnitt über das Gelenk 8′ an einer Seitenkante mit der zweiten Blattfederscheibe 4′ einstückig verbunden ist. Die Blattfederscheibe 4′ ist wiederum über das Gelenk 9′ einstückig mit der weiteren Blattfederscheibe 5′ verbunden. Schließlich besteht eine weitere einstückige Verbindung zwischen der Blattfederscheibe 5′ und der blatt federscheibe 6′ über das Gelenk 10′, welches um 90° zu dem Gelenk 9′ gedreht ist. An die Blattfederscheibe 6′ schließt sich schließlich ein weiteres Gelenk 11′ an, welches dem Gelenk 6′ um 180° gegenüberliegt. Dieser gebildete Federblock ist einstückig hergestellt, indem zwischem den einzelnen Scheiben Einschnitte 21, 22, 23 und 24 vorgenommen sind.

Diese Einschnitte sind vorzugsweise im Funkenerosion-Bearbeitungsverfahren hergestellt worden. Dadurch ist ein nur sehr dünner Einschnitt von großer Präzision möglich, wodurch ein Plattenpaket von exakt parallel zueinander ausgerichteten Blattfederscheiben entsteht. Die gesamte Bauhöhe dieses aus Federscheiben gebildeten Federpaketes beträgt beispielsweise nur 6 bis 7 Millimeter. Die sich um 180° gegenüberliegenden Gelenke 8' und 9' sowie die dazu um 90° versetzten Gelenke 10' und 11' erlauben eine exakte Ausrichtung des Tastkopfes in der X- und Y-Richtung. Die Scheiben 3', 4', 5', 6' und 7' besitzen eine zentrale Öffnung 25, in welche der zylindrische Teil 27 des Aufnahmekörpers 26 für den Taster 2 hineinragt. Der Aufnahmekörper 26 ist mit der oberen Scheibe 3' durch Schrauben 31 verbunden. Die Verbindung der Blattfedern 3', 4', 5' und 6' mit der unteren Scheibe 7' erfolgt wiederum durch Schrauben 32, welche in das Gelenk 11' eingesetzt sind.

Auf der Oberfläche 29 der unteren Scheibe 7' befinden sich auf einem gemeinsamen Kreisring 35 vier gleichmäßig verteilte Hartmetallzapfen 36, die unter Zwischenfügung einer Isolierung 37 mit der Scheibe 7' durch Kleben fest verbunden sind. In den Hartmetallzapfen 36 sind Querbohrungen 38 vorgesehen, in die ein Kabelschuh oder ein Kabelstift 44 kontaktierend eingesetzt werden kann, der über eine Verbindungsleitung 33 mit einer Meßwertauswerteeinrichtung 34 verbunden ist. Es sind auch nur drei Hartmetallzapfen 36 einsetzbar.

Die Hartmetallzapfen 36 stehen in der Ruhelage des Tastkopfes 1 mit Hartmetallkugeln 39 in Kontakt. Diese Kugeln 39 sind in Durchgangsbohrungen 40 der Scheiben 3', 4', 5' und 6' eingepreßt, die sich in koaxialer Ausrichtung zu den Hartmetallzapfen 36 befinden. Die Hartmetallkugeln 39 weisen eine Kontaktmantelfläche beispielsweise aus Nickel oder Gold auf. Bei einem Antasten des Tasters 2 an ein Werkstück 41 erfährt der Taster 2 eine Auslenkung in der X- und Y-Richtung, wobei sich ein Kontakt zwischen einem Hartmetallzapfen 36 und einer Hartmetallkugel 39 löst. Damit wird der Kontakt unterbrochen und ein Signal in der Auswerteeinheit 34 erzeugt, welches für einen Meßwert steht.

Aus der Darstellung des Federpaketes der Figuren 5 bis 8 ist ersichtlich, daß die Hebelarme vom Taster 2 zu allen vier Seiten immer gleichlang sind. Der Taster 2 kippt immer über eine parallel zu den Koordinatenrichtungen X und Y laufende Seitenkante einer Scheibe oder Blattfederscheibe 3', 4', 5' und 6'. Dies gewährleistet ein sehr genaues Abkippen in den Koordinatenrichtungen. Die Rückführung des Tasters 2 geschieht im wesentlichen immer durch die Blattfederscheiben 3', 4', 5' und 6' in den Gelenken 8', 9', 10' und 11'. die Auslenkung des Tasters 2 in der Koordinatenrichtung Z erfolgt gegen die Kraft einer eingesetzten Feder 28, die sich am Gehäuse 15 des Tastkopfes 1 abstützt. Ferner kann das Auslenken des Tasters 2 in der Z-Richtung nach oben durch einen Anschlag im Gehäuse 15 begrenzt werden.

Die Ausbildung der Scheiben 3', 4', 5' und 6' und ihre besondere Anordnung im Winkel um 90° zueinander bietet den Vorteil, daß die Blattfederscheiben selbst relativ lange Feder-Hebelarme bilden und andererseits ihre Beanspruchung immer in Faserrichtung des Werkstoffes erfolgt. Dies hat zur Folge, daß bei Kollisionen des Tasters 2 mit einem ortsfesten Gegenstand eine federnde Auslenkung geschieht, ohne daß eine bleibende Verformung der Blattfederscheiben oder ihrer Gelenke eintritt. Dadurch ist die Wirksamkeit une die Funktionsfähigkeit in erfinderischer Weise entscheidend gegenüber dem Stand der Technik verbessert worden.

## Ansprüche

1. Dynamischer Tastkopf für Meßmaschinen und für den Einsatz in Bearbeitungsmaschinen zur Lösung von Meßaufgaben, mit einem zentral eingesetzten und in mindestens zwei Koordinatenrichtungen auslenkbaren Taster, der um eine vom Taster immer gleich weit entfernte und immer in gleicher Ebene liegende Kippachse kippbar ausgebildet ist, und mit einer elektromechanischen, induktiven oder optischen Signalübertragung,
dadurch gekennzeichnet,
daß der Tastkopf (1) ein Paket von fünf übereinanderliegenden, mit gleichlangen Hebelarmen ausgestatteten Platten, Scheiben o.dgl. (3,4,5,6,7) aufweist, von denen die drei zwischen den äußeren Scheiben (3,7) angeordneten Scheiben (4,5,6) Blattfedern sind, die untereinander und mit den äußeren Scheiben (3,7) gelenkig derart verbunden sind, daß der Kraftfluß bei Auslenkung des Tasters (2) in die Koordinatenrichtungen X und Y von der ersten Scheibe (3) über das Gelenk (8) auf die zweite Blattfederscheibe (4), von der zweiten Blattfederscheibe (4) über das gegenüberliegende Gelenk (9) auf die dritte Blattfederscheibe (5), von dieser über das um 90° versetzte Gelenk (10) auf die vierte Blattfederscheibe (6) und von dieser über ein wiederum gegenüberliegendes Gelenk (11) auf die fünfte Scheibe (7) verläuft.

2. Dynamischer Tastkopf nach Anspruch 1,
dadurch gekennzeichnet,
daß die im Bereich ihrer Längskanten die Gelenke (8,9, 10,11) bildenden Scheiben (3,4,5,6,7) fest miteinander verbunden sind.

3. Dynamischer Tastkopf nach den Ansprüchen 1 und 2,
dadurch gekennzeichnet,
daß die Verbindung zumindest der Blattfederscheiben (4,5,6) durch Schweißen hergestellt ist.

4. Dynamischer Tastkopf nach den Ansprüchen 1 bis 3,
dadurch gekennzeichnet,
daß die Gelenke (9,10) der blattfederscheiben (4,5,6) mit ihren zugeordneten verschweißten Endkanten in die in der Längsachse aufgeschlitzten Zylinder eingeklemmt sind.

5. Dynamischer Tastkopf nach Anspruch 1,
dadurch gekennzeichnet,
daß die erste Scheibe (3$'$) gemeinsam mit den drei weiteren Blattfederscheiben (4$'$,5$'$,6$'$) und den die Scheiben bzw. Blattfederscheiben (3$'$,4$'$,5$'$,6$'$) verbindenden Gelenken (8$'$,9$'$,10$'$,11$'$) aus einem dünnen Block (1) einstückig gebildet ist, während die vierte Blattfederscheibe (6$'$) mit der fünften Scheibe (7$'$) über ein Gelenk (11$'$) befestigt ist.

6. Dynamischer Tastkopf nach Anspruch 5,
dadurch gekennzeichnet,
daß die Scheiben (3$'$,4$'$,5$'$,6$'$) durch parallele Einschnitte (21,22,23,24), die jeweils in den X- und Y-Ebenen verlaufen, aus dem Block (1) einstückig gebildet sind und die Gelenke (8$'$,9$'$,10$'$,11$'$) die jeweils aus den Einschnitten (21,22,23,24) stehengelassenen, in Z-Richtung verlaufenden Verbindungsstege zwischen den Scheiben (3$'$,4$'$,5$'$,6$'$) sind.

7. Dynamischer Tastkopf nach den Ansprüchen 5 und 6,
dadurch gekennzeichnet,
daß die Einschnitte (21,22,23,24) im Funkenerosion-Bearbeitungsverfahren hergestellt sind.

8. Dynamischer Tastkopf nach den Ansprüchen 5 und 6,
dadurch gekennzeichnet,
daß die Einschnitte (21,22,23,24) im Laserschneideverfahren hergestellt sind.

9. Dynamischer Tastkopf nach Anspruch 5,
dadurch gekennzeichnet,
daß das unterste Gelenk (11$'$) als Steg ausgebildet ist, der mit der fünften Scheibe (7$'$) durch Schrauben (32) befestigt ist.

10. Dynamischer Tastkopf nach den Ansprüchen 1 bis 5,
dadurch gekennzeichnet,
daß die Blattfederscheiben (4,5,6) zumindest eine koaxial zueinander angeordnete Durchgangsbohrung (12) aufweisen, in die ein mit einer äußeren Scheibe (3,7) fest verbundener Stift (13) eintaucht.

11. Dynamischer Tastkopf nach den Ansprüchen 1 bis 4,
dadurch gekennzeichnet,

daß die Blattfederscheiben (4,5,6) mit den äußeren Scheiben (3,7) durch aufgeschraubte oder aufgenietete Stege (14) gelenkig verbunden sind.

12. Dynamischer Tastkopf nach den Ansprüchen 1 und 5,
dadurch gekennzeichnet,
daß der Taster (2) in der Koordinatenrichtung Z gegen die Wirkung der Blattfederscheiben (4,5,6) geradlinig in der Z-Achse bewegbar ist.

13. Dynamischer Tastkopf nach den Ansprüchen 1, 5 und 12,
dadurch gekennzeichnet,
daß die übereinanderliegenden Scheiben (3,4,5,6,7) durch vier an den Scheibenecken angeordnete und auf Zug beanspruchte Federn (16) in Ruhelage gehalten sind.

14. Dynamischer Tastkopf nach Anspruch 5,
dadurch gekennzeichnet,
daß auf der den Blattfederscheiben (4$'$,5$'$,6$'$) zugewandten Oberfläche (29) der fünften Scheibe (7$'$) drei oder vier Hartmetallzapfen (36) unter Zwischenfügung einer Isolierung (37) fest aufgebracht sind, die auf einem gemeinsamen Kreisring (35) und koaxial zu den Hartmetallzapfen (36) in allen übereinanderliegenden Scheiben (3$'$,4$'$,5$'$,6$'$) angebrachten Durchgangsbohrungen (40) angeordnet sind und gegen in den Durchgangsbohrungen (40) eingepreßten Hartmetallkugeln (39) in der Ruhelage des Tastkopfes anliegen.

15. Dynamischer Tastkopf nach Anspruch 14,
dadurch gekennzeichnet,
daß die Hartmetallzapfen (36) auf der Oberfläche der fünften Scheibe (7$'$) aufgeklebt sind.

16. Dynamischer Tastkopf nach Anspruch 14,
dadurch gekennzeichnet,
daß die Hartmetallkugeln (39) eine Schicht aus elektrisch leitendem Material aufweisen.

17. Dynamischer Tastkopf nach den Ansprüchen 14 und 15,
dadurch gekennzeichnet,
daß in den Hartmetallzapfen (36) Querbohrungen (38) vorgesehen sind.

18. Dynamischer Tastkopf nach den Ansprüchen 1 und 5,
dadurch gekennzeichnet,
daß die erste Scheibe (3$'$) mit einem Aufnahmekörper (26) für den Taststift (2) verbunden ist, dessen zylindrischer Körper (27) durch zentral in den Scheiben (3$'$,4$'$,5$'$,6$'$,7$'$) angeordnete Öffnungen (25) ragt, während die Kopfscheibe (42) unter der Wirkung einer sich am Gehäuse (15) des Tastkopfes abstützenden Feder (28) steht.

FIG. 1

FIG. 2

FIG. 3

FIG. 4

FIG. 5

FIG. 6

FIG. 7

FIG. 8